# EUROPEAN PATENT APPLICATION

(11) **EP 4 763 558 A1**
(43) Date of publication of application: **24.06.2026**
(21) Application number: 25224329.0
(22) Date of filing: 17.12.2025
(51) Int. Cl.: B60K 1/02, B60K 17/04

(54) **POWERTRAIN FOR AUTO-TRACTION AND ROAD MOTOR VEHICLE PROVIDED WITH SUCH POWERTRAIN**

(30) Priority: 18.12.2024 IT 202400028917
(71) Applicant: FERRARI S.p.A., 41100 Modena (IT)
(72) Inventor: LUMINI, Sandro, 41100 Modena (IT)
(74) Representative: Studio Torta S.p.A.

(57) **Abstract**

A powertrain for auto-traction (1) that includes an electric drive unit (2), which comprises: an engine-block (10) with a rigid structure; a drive shaft (11), which is at least partially housed within said engine-block (10) with the capability of rotating about its longitudinal/ central axis (L); a series of rotating electric motors (12), which are oriented transversally to said drive shaft (11) and are arranged adjacent to each other within special accommodating seats (13) made in said engine-block (10) next to said drive shaft (11), so as to form at least one row of electric motors; and a gear train (14), which is housed within said engine-block (10) and is structured so as to mechanically connect the electric motors (12) to one another and to the drive shaft (11), in order to allow said electric motors (12) to jointly drive into rotation said drive shaft (11).

## Description

### CROSS-REFERENCE TO RELATED APPLICATIONS

This patent application claims priority from Italian patent application no. 102024000028917 filed on December 18, 2024, the entire disclosure of which is herein incorporated by reference.

### TECHNICAL FIELD

The invention relates to a powertrain for auto-traction and to a road motor vehicle provided with such powertrain.

More in detail, the invention relates to an electric powertrain to be used in high-performance electric or hybrid cars. Use to which the following disclosure will make explicit reference without however lacking generality.

### STATE OF THE ART

As it is known, most electric or hybrid cars currently on the market are usually provided with an electric motor for auto-traction, which is mechanically connected to the front wheels and/or to the rear wheels of the vehicle.

In some more sophisticated and high-performance models, however, the electric car can be provided with two distinct electric motors for auto-traction. A first electric motor is mechanically connected to the sole front wheels of the vehicle, whereas the second electric motor is mechanically connected to the sole rear wheels of the vehicle.

Alternatively, the two electric motors can also be mechanically connected to the wheels of one single axle of the vehicle, so that each electric motor can drive into rotation one single wheel of the front or rear axle of the vehicle.

Clearly, the electric motor/s for auto-traction has/ have a power and torque delivery curve that is completely different from those typical of a multi-cylinder internal combustion engine for auto-traction, with significant performance advantages resulting therefrom.

Unfortunately, despite the performance advantages mentioned above, some people consider today's electric cars unattractive, because they lack personality compared to cars with a multi-cylinder internal combustion engine with the same power.

Unfortunately, this problem is exacerbated in mid-engine cars, where the powertrain is usually visible from the outside of the vehicle, with all the resulting problems.

The appearance of modern electric motors for auto-traction, in fact, is disliked by many people, because it is considered dull and insignificant compared to that of a modern internal combustion engine with V6, V8 or V12 architecture.

### SUMMARY OF THE INVENTION

Aim of the present invention is to make the appearance of the electric motor for auto-traction similar to that of a multi-cylinder internal combustion engine, advantageously with a V-shaped architecture.

In accordance with above aims, according to the present invention there is provided a powertrain for auto-traction as defined in claim 1 and preferably, though not necessarily, in any one of the claims depending on it.

According to the present invention, there is moreover provided an electric or hybrid road motor vehicle as defined in claim 12.

### BRIEF DESCRIPTION OF THE DRAWINGS

The invention will now be described with reference to the accompanying drawings showing a non-limiting embodiment thereof, wherein:
- Figure 1 is a schematic perspective view of an electric car provided with a powertrain realized according to the teachings of the present invention, with transparent parts and parts removed for clarity's sake;
- Figure 2 is a front view of the powertrain shown in figure 1, with sectional parts and parts removed for clarity's sake;
- Figure 3 is a side view of the powertrain shown in figure 2, sectioned along section line A-A and with parts removed for clarity's sake.

### DETAILED DESCRIPTION OF THE EMBODIMENTS

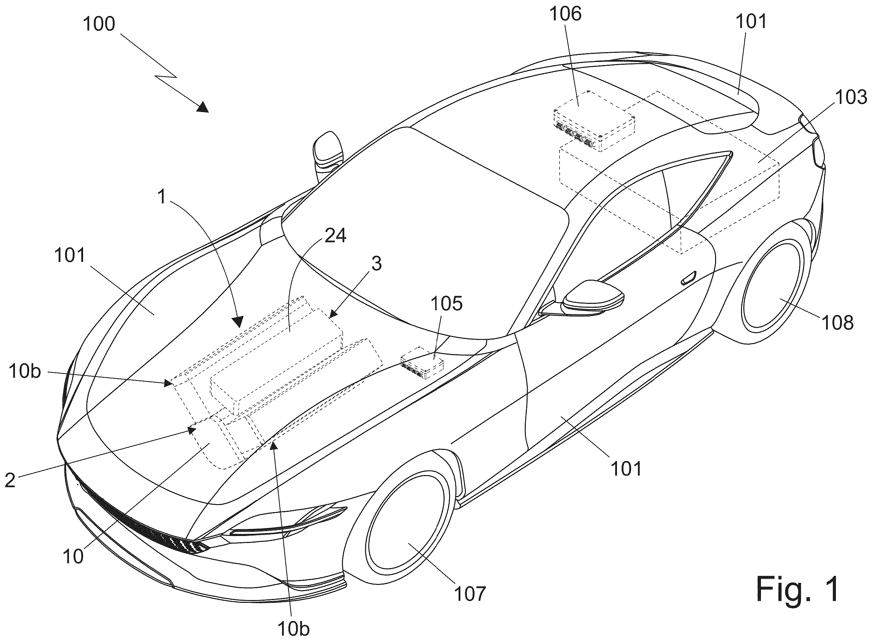

With reference to figure 1, number 1 denotes, as a whole, an electric powertrain for auto-traction, which incorporates a plurality of electric motors and is particularly suited to be used in an electric- or hybrid-propulsion road-use motor vehicle 100. The motor vehicle 100, in addition, can advantageously be used to transport things and/or people.

More in detail, the motor vehicle 100 is provided with a plurality of ground resting wheels and the powertrain 1 is adapted to drive into rotation at least one ground resting wheel of the vehicle or, more advantageously, of at least one pair of ground resting wheels of the vehicle.

The motor vehicle 100, in particular, is provided with a rigid vehicle-body 101, advantageously with a self-supporting structure, which rests on the ground by means of a plurality of advantageously tyred, ground resting wheels and is provided with a passenger compartment structured and dimensioned so as to accommodate the vehicle driver (i.e. the person driving the vehicle) and preferably also at least one passenger advantageously located beside the same driver.

In addition, the motor vehicle 100 comprises: the electric powertrain 1, which is located on the vehicle-body 101 or, more advantageously within the vehicle-body 101, and is adapted to drive into rotation at least one or, more advantageously, at least one pair of said ground resting wheels; and an electric-energy accumulator 103 advantageously of the rechargeable type, which is located on the vehicle-body 101, or more advantageously within the vehicle-body 101, and is capable of storing, inside itself, a given quantity of electric energy to be supplied to the powertrain 1.

Preferably, the motor vehicle 100 is moreover provided with an electronic control unit 105, hereinafter also referred to as vehicle control unit, which is located on the vehicle-body 101, or more advantageously within the vehicle-body 101, and is adapted to control the powertrain 1 based on the commands given by the vehicle driver.

In other words, the electronic control unit 105 receives and processes the commands given by the vehicle driver, for example through the accelerator pedal (not visible in the figures), and is adapted to control the powertrain 1 according to these commands.

More in detail, the powertrain 1 comprises: an auto-traction drive unit 2, which is located on the vehicle-body 101, or more advantageously within the vehicle-body 101, and incorporates a plurality of electric motors that are jointly adapted to drive into rotation at least one or, more advantageously, at least one pair of said ground resting wheels; and an advantageously electronically controlled, electrical power supply unit 3, which is located on the vehicle-body 101 or, more advantageously, within the vehicle-body 101, is interposed between the electric-energy accumulator 103 and the electric drive unit 2 and is adapted to control/adjust the flow of electric energy towards the drive unit 2, advantageously as a function of the commands given by the vehicle driver.

The electronic control unit 105, in turn, is preferably adapted to control the electrical power supply unit 3 based on the commands given by the vehicle driver.

In other words, the electronic control unit 105 receives and processes the commands given by the vehicle driver, for example through the accelerator pedal (not visible in the figures), and is adapted to control the electrical power supply unit 3 as a function of these commands.

Preferably, the motor vehicle 100 is finally provided with an advantageously electronically controlled, charging unit 106, which is located on the vehicle-body 101, or more advantageously within the vehicle-body 101, and is adapted to charge the electric-energy accumulator 103 when the motor vehicle 100 is connected to an external source of electric energy.

The external source of electric energy can be, for example, a charging station for road vehicles of known type or the traditional domestic power mains.

With reference to Figure 1, in the example shown, in particular, the vehicle-body 101 is preferably oblong in shape and preferably rests on the ground by means of at least one pair of front wheels 107 and at least one pair of rear wheels 108.

Preferably, the front wheels 107 and the rear wheels 108 are moreover arranged in pairs on opposite sides of the vehicle vertical midplane, advantageously in a substantially specular position relative to the latter. In other words, the front wheels 107 and the rear wheels 108 are arranged substantially at the vertices of a rectangle or an isosceles trapezoid. Furthermore, the passenger compartment of the vehicle-body 101 is preferably located between the front wheels 107 and the rear wheels 108.

In addition, the front wheels 107 are preferably drive and steering wheels, whereas the rear wheels 108 are preferably drive and optionally also steering wheels.

Therefore, the powertrain 1, or rather the electric drive unit 2, is preferably adapted to drive into rotation the rear wheels 108.

In other words, in the example shown, the motor vehicle 100 is preferably a road-use rear-wheel drive car.

With reference to Figure 1, in particular, the drive unit 2 of the powertrain 1 is preferably located in the front part of the vehicle-body 101 and is preferably adapted to drive into rotation the sole rear wheels 108 advantageously via a longitudinal transmission shaft (not shown) and a differential gear (not shown), both of known type.

The electrical power supply unit 3, in turn, is preferably located close to the electric drive unit 2.

In other words, the electrical power supply unit 3 preferably is located in the front part of the vehicle-body 101, as well.

The electric-energy accumulator 103 and/or the charging unit 106, on the other hand, are preferably located in the rear part of the vehicle-body 101.

Preferably, the electric-energy accumulator 103 is furthermore a rechargeable battery pack, advantageously with a nominal capacity greater than or equal to 50 kWh and/or with a nominal voltage greater than 600 Volts or, more conveniently, equal to about 800 Volts.

In other words, the electric-energy accumulator 103 is preferably a high-voltage battery pack.

With reference to figures 1, 2 and 3, on the other hand, the electric drive unit 2 comprises: an engine-block 10 with a rigid and advantageously also self-supporting structure, which is oblong shape in and is preferably made of metal material; a (straight) main drive shaft 11, which is at least partially housed within the engine-block 10 with the capability of freely rotating about its longitudinal/central axis L; a series of rotating electric motors 12, which are oriented transversally to the drive shaft 11 and are arranged adjacent to each other within special accommodating seats 13 made in the engine-block 10 next to the drive shaft 11, so as to form at least one row of electric motors; and a gear train 14, which is housed within the engine-block 10, preferably next to the drive shaft 11, and is structured so as to mechanically connect the electric motors 12, or rather the rotors of the electric motors 12, to one another and to the drive shaft 11, in order to allow the electric motors 12 to jointly drive into rotation the drive shaft 11.

In addition, the electric motors 12 are preferably even in number and the gear train 14 is preferably structured so as to cause the rotation of the electric motors 12, or rather of the rotors of the electric motors 12, in pairs one in direction opposite to the other.

More in detail, the engine-block 10 preferably extends parallel to the longitudinal axis L of the drive shaft 11.

The electric motors 12, on the other hand, are preferably structurally substantially identical to one another, and are preferably arranged within the engine-block 10 locally substantially perpendicular to the drive shaft 11.

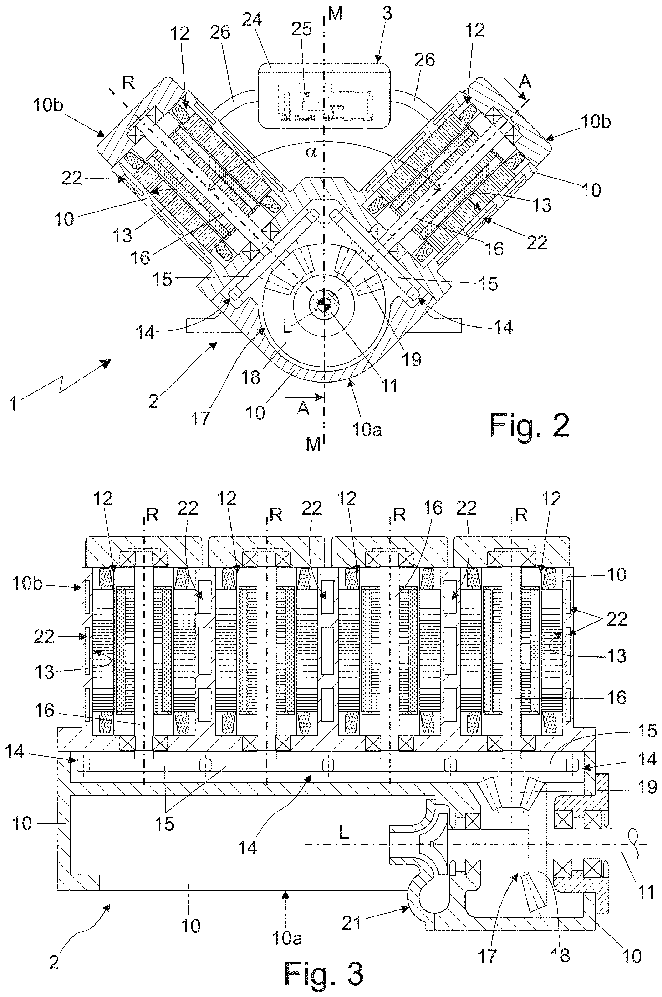

With reference to Figures 1 and 2, furthermore, the engine-block 10 preferably has a substantially V-shaped transversal profile, and the electric motors 12 are preferably divided into two separate rows or banks, which are located on opposite sides of the drive shaft 11, each within a respective side wing of the substantially V-shaped engine-block 10.

More in detail, the drive shaft 11 is preferably located substantially at the vertex of the V advantageously straddling a longitudinal midplane M of the engine-block 10, whereas the electric motors 12 are preferably divided into two separate rows or banks that are located on opposite sides of said longitudinal midplane M, each within a respective side wing of the engine-block 10.

Preferably, the electric motors 12 forming the or each row or bank furthermore are substantially coplanar and advantageously also parallel to each other.

In addition, the electrical power supply unit 3 of the powertrain 1 is preferably located in the space between the two opposite side wings of the engine-block 10, advantageously straddling the longitudinal midplane M of the engine-block 10.

More in detail, with reference to Figures 2 and 3, the engine-block 10 is preferably provided with a central section 10a arranged astride the longitudinal midplane M, and with two opposite side wings or sections 10b that are arranged on opposite sides of the longitudinal midplane M, advantageously in a substantially specular position with respect to the latter, and are joined up to the central section 10a on opposite sides thereof, advantageously in a seamless manner.

Preferably, the two side wings or sections 10b of the engine-block 10 are moreover inclined to each other by an angle α preferably ranging between 30° and 180°.

In the example shown, in particular, the inclination angle α between the two side wings or sections 10b of the engine-block 10 is preferably equal to about 90°.

Clearly, the inclination angle α may advantageously be also equal to 60°, 120° or 180°.

The drive shaft 11 is preferably housed in axially rotatable manner in the central section 10a of the engine-block 10, advantageously substantially astride the midplane M. The two rows of electric motors 12, on the other hand, are preferably located each within a respective side section 10b of the engine-block 10.

In the example shown, in addition, the electric drive unit 2 is preferably provided with eight electric motors 12 divided into two rows or banks, each consisting of four electric motors 12.

With reference to Figures 2 and 3, on the other hand, the gear train 14 is preferably located in the central section 10a of the engine-block 10, next to the drive shaft 11.

Furthermore, the gear train 14 preferably comprises, for the or each row or bank of electric motors 12, a series of large gear wheels 15 that are rigidly fixed each on the output shaft 16 of a respective electric motor 12, and moreover directly or indirectly mesh to one another, for example via the interposition of an intermediate idle gear wheel.

With reference to Figures 2 and 3, furthermore, the series of gear wheels 15 is preferably arranged next to the drive shaft 11 and the gear train 14 preferably moreover comprises a bevel gear 17, which transmits the rotary motion from one of the gear wheels 15 to the drive shaft 11.

In the example shown, in particular, the gear wheels 15 are preferably substantially coplanar to each other, have preferably the same dimensions, and finally are preferably dimensioned so as to directly mesh with each other so as to cause two adjacent electric motors 12 to rotate, in pairs, with the same angular speed and with opposite directions of rotation.

The bevel gear 17, on the other hand, comprises a bevel gear wheel 18 directly keyed to the drive shaft 11 and, for the or each row of electric motors 12, a pinion 19 that meshes with the bevel gear wheel 18 and is moreover directly keyed to the output shaft 16 of one of the electric motors 12 of the row or bank, downstream of and coaxial to the relative gear wheel 15.

With reference to Figures 2 and 3, on the other hand, the electric motors 12 forming the/each row or bank preferably are substantially coplanar to each other and advantageously lie on a plane that intersects the longitudinal axis L of the drive shaft 11.

In other words, the rotation axes R of the output shafts 16 of the electric motors 12 forming each row or bank are preferably substantially parallel and coplanar to one another.

Preferably, the rotation axes R of the output shafts 16 of the electric motors 12 forming each row or bank moreover intersect and are substantially perpendicular to the longitudinal axis L of the drive shaft 11.

Each electric motor 12, in addition, is preferably a polyphase (three-phase) alternating-current electric motor advantageously with a permanent magnet rotor.

More in detail, the electric motor 12 comprises: an outer stator with a substantially tubular cylindrical structure, which is arranged within an accommodating seat 13 locally substantially coaxial to the output shaft 16 of the motor; and a rotor with a substantially cylindrical structure, which is housed in axially rotatable manner within the stator coaxially to the latter, and at same time is rigidly keyed to the output shaft 16 so as to rotate together with the latter.

The stator, in addition, is preferably provided with a series of electrical windings, which are suitably spaced/ distributed around the rotation axis R of the output shaft 16, so as to generate, when alternating electric current flows through them, a rotating magnetic field affecting the inner rotor.

The rotor, on the other hand, is preferably provided with a series of permanent magnets, which are distributed around the rotation axis R of the output shaft 16, and generate a second radial magnetic field that interacts in known manner with the rotating magnetic field produced by the electrical windings of the stator.

The structures of the stator and of the rotor of electric motor 12 are of known type and therefore will not be described any further.

With reference to Figures 2 and 3, the drive unit 2 is preferably additionally provided with a motor cooling system, which is adapted to circulate a flow of water or of other heat transfer fluid around the electric motors 12, so as to remove heat from them.

The cooling system, in addition, preferably comprises a circulation pump 21, which is advantageously housed within the engine-block 10 and is adapted to circulate a flow of water or of other heat transfer fluid within a series of ducts 22 that extend within the engine-block 10, advantageously around the accommodating seats 13 of the electric motors 12.

In addition, the circulation pump 21 is preferably housed in the central section 10a of the engine-block 10 and is preferably directly operated by the drive shaft 11.

In the example shown, in particular, the circulation pump 21 is preferably a centrifugal circulation pump, and is preferably located at the head of the drive shaft 11, advantageously so that its impeller is directly operated by the drive shaft 11.

With reference to Figures 1 and 2, on the other hand, the electrical power supply unit 3 is preferably adapted to transform/convert the direct-current electric energy coming from the electric-energy accumulator 103 into alternating-current electric energy suitable for the electric drive unit 2, or rather for the electric motors 12 of the electric drive unit 2.

Preferably, the electrical power supply unit 3 is moreover structured so as to power the various electric motors 12 separately from one another.

More in detail, the electrical power supply unit 3 preferably comprises: an advantageously oblong-shaped, rigid outer casing 24, which is arranged between the two side wings or sections 10b of the engine-block 10, advantageously astride the longitudinal midplane M of the engine-block 10; and a plurality of separate and distinct power-supply modules 25, which are located within the rigid casing 24 and are adapted to power each a respective electric motor 12 of the drive unit 2.

Preferably, the electrical power supply unit 3, or rather the power-supply modules 25, is preferably connected to the various electric motors 12 by means of conductor cables 26, which protrude from both sides of the electrical power supply unit 3.

The electronic control unit 105, in turn, is preferably adapted to command each power-supply module 25 of the electrical power supply unit 3.

Preferably, each electric motor 12 can further operate as an electric generator, whereby the electric power-supply unit 3, or rather each power-supply module 25 of the electric power-supply unit 3, is preferably structured so as to control the flow of electric energy from the electric-energy accumulator 103 to the relative electric motor 12 and vice versa.

In the example shown, in particular, each power-supply module 25 preferably consists of, or anyway comprises, an electronically-controlled power inverter, advantageously of the bidirectional type, which is interposed between the electric-energy accumulator 103 and the relative electric motor 12, and is adapted to transform the diretc-current electric energy coming from the electric-energy accumulator 103 into alternating-current electric energy suitable for the related electric motor 12, preferably by varying the frequency and/or voltage thereof as a function of the signals coming from the electronic control unit 105.

General operation of the powertrain 1 and of the electric drive unit 2 of motor vehicle 100 work are easily inferable from the above description and does not require further explanations.

The advantages connected with the special structure of the powertrain 1 are remarkable.

The particular architecture of the electric powertrain 1 and, more in detail, of the electric drive unit 2 makes the motor of the motor vehicle 100 aesthetically very similar to a traditional multi-cylinder internal combustion engine with a V-shaped architecture.

Furthermore, when located between the two opposite side wings 10b of the engine-block 10, the electrical power supply unit 3 is very similar to the intake manifold of a modern multi-cylinder internal combustion engine with a V-shaped architecture.

The electric powertrain 1 is thus suitable for being used in a mid-engine electric car with exposed engine.

In addition, given the same power delivered, the weight and dimensions of the electric drive unit 2 are smaller than those of one single big electric motor for auto-traction.

Last but not least, the use of counter-rotating electric motors 12 makes it possible to significantly reduce the inertia and the gyroscopic effect of the motor, to the advantage of the manoeuvrability and reactivity of the motor vehicle 100.

Finally, it is clear that modifications and variations may be made to the electric powertrain 1, or rather to the electric drive unit 2, and to the motor vehicle 100 without however departing from the scope of the present invention.

For example, the electric drive unit 2 could be provided with twelve electric motors 12 divided into two rows or banks, each consisting of six electric motors 12, thus creating a motor with a V12-like architecture.

Alternatively, the electric drive unit 2 could be provided with six electric motors 12 divided into two rows or banks, each consisting of three electric motors 12, thus creating a motor with a V6-like architecture.

In a different not-shown embodiment, furthermore, the gear train 14 may comprise, for each electric motor 12 of the drive unit 2, a respective bevel gear, which directly transmits the rotary motion of the output shaft 16 of the motor to the main drive shaft 11.

More in detail, in this variant, each bevel gear of the gear train 14 comprises a bevel gear wheel rigidly keyed to the drive shaft 11 and a pinion directly keyed to the output shaft 16 of the electric motor 12.

Clearly, two electric motors 12 lying on a same plane orthogonal to the drive shaft 11 can share a same bevel gear wheel keyed to the drive shaft 11.

## Claims

1. A powertrain for auto-traction (1) **characterised by** including an electric drive unit (2) that comprises: an engine-block (10) with a rigid structure; a drive shaft (11), which is at least partially housed within said engine-block (10) with the capability of rotating about its longitudinal/central axis (L); a series of rotating electric motors (12), which are oriented transversally to said drive shaft (11) and are arranged adjacent to each other within special accommodating seats (13) made in said engine-block (10) next to said drive shaft (11), so as to form at least one row of electric motors; and a gears train (14), which is housed within said engine-block (10) and is structured so as to mechanically connect said electric motors (12) to one another and to said drive shaft (11), in order to allow said electric motors (12) to jointly drive into rotation said drive shaft (11).

2. Powertrain according to claim 1, wherein said electric motors (12) are arranged within said engine-block (10) locally substantially perpendicular to said drive shaft (11).

3. Powertrain according to claim 1 or 2, wherein said engine-block (10) extends parallel to the longitudinal/ central axis (L) of the drive shaft (11), and has a substantially V-shaped transversal profile; the electric motors (12) being divided into two separate rows, which are located on opposite sides of said drive shaft (11), each within a respective side wing (10b) of said substantially V-shaped engine-block (10).

4. Powertrain according to claim 3, wherein said drive shaft (11) is located in the engine-block (10) at the apex of the V.

5. Powertrain according to any one of the preceding claims, wherein the electric motors (12) forming the or each row of electric motors are substantially coplanar and parallel to each other.

6. Powertrain according to any one of the preceding claims, wherein said gears train (14) is structured so as to kip rotating, in pairs, said electric motors (12) one in the opposite direction of the other.

7. Powertrain according to any one of the preceding claims, wherein said electric motors (12) are even in number.

8. Powertrain according to any one of the preceding claims, wherein said powertrain (1) additionally comprises an electrical power supply unit (3) which is adapted to control/regulate the flow of electric energy to said electric motors (12).

9. Powertrain according to claim 8, wherein said electrical power supply unit (3) is located between the two side wings (10b) of said engine-block (10).

10. Powertrain assembly according to claim 8 or 9, wherein said electrical power supply unit (3) comprises: an oblong-shaped, rigid casing (24); and a plurality of power-supply modules (25), which are located within said rigid casing (24) and are capable of powering each a respective electric motor (12).

11. Powertrain according to any of the preceding claims, wherein each electric motor (12) is a polyphase-type alternating-current electric motor.

12. A motor road vehicle (100) comprising: a rigid vehicle-body (101) provided with ground resting wheels (107, 108); an electric powertrain (1), which is adapted to drive into rotation at least a first wheel of said ground resting wheels (107, 108); and an electric-energy accumulator (103), which is adapted to store within itself a given quantity of electric energy to be supplied to said powertrain (1);
the motor vehicle (100) being **characterised in that** said powertrain (1) is realized according to any one of the preceding claims.
